# EUROPÄISCHE PATENTANMELDUNG

(11) **EP 4 019 815 A1**
(43) Veröffentlichungstag der Anmeldung: **29.06.2022**
(21) Anmeldenummer: 21211914.3
(22) Anmeldetag: 02.12.2021
(51) Int. Cl.: F16K 1/30, F16K 1/36, F16K 1/46, F16K 1/02, F17C 13/04

(54) **VENTIL FÜR FLUIDLEITUNG MIT VERBESSERTER DICHTWIRKUNG UND DRUCKBEHÄLTER MIT VERBESSERTEM VENTIL**

(30) Priorität: 17.12.2020 DE 102020134037
(71) Anmelder: ArianeGroup GmbH, 82024 Taufkirchen (DE)
(72) Erfinder: Unrath, Dieter, 74706 Osterburken (DE); Mantel, Erwin, 74219 Möckmühl (DE)
(74) Vertreter: Schornack, Oliver

(57) **Zusammenfassung**

Es wird ein Ventil (100) für eine Fluidleitung (200) beschrieben, das einen ersten Gehäuseabschnitt (110), der einen Ventilsitz (115) bildet, und einen Spindelteller (153), der dazu eingerichtet ist, von einer Schließstellung zu einer Offenstellung bewegt zu werden, umfasst. Ferner ist der Spindelteller (153) dazu eingerichtet, ein ringförmiges Dichtelement (160) aufzunehmen, das in der Schließstellung des Spindeltellers (153) an einem ersten Abschnitt (116) des Ventilsitzes (115) anliegt. Der Spindelteller (153) kann mindestens einen Abschnitt (154, 155, 156, 157) umfassen, der in der Schließstellung des Spindeltellers (153) an einem zweiten Abschnitt (116, 117) des Ventilsitzes (115) anliegt. Zudem ist ein Druckbehälter mit mindestens einem solchen Ventil beschrieben.

## Beschreibung

Die Erfindung betrifft ein Ventil für eine Fluidleitung mit verbesserter Dichtwirkung am Ventilsitz sowie einen Druckbehälter mit solch einem Ventil. Insbesondere betrifft die Erfindung ein Ventil für eine Fluidleitung mit einem Spindelteller, der ein ringförmiges Dichtelement aufnimmt, und einen Druckbehälter, an dem mindestens ein solches Ventil vorgesehen ist.

Bekannte Ventile für Fluidleitungen und Druckbehälter weisen für gewöhnlich eine Spindel auf, die durch Drehbetätigung eines Aktuators in ihrer Längsrichtung bewegt wird. Ein an einem Ende der Spindel angeordneter Spindelteller dreht dabei zusammen mit der Spindel und wird auf einen Ventilsitz gedrückt. Manche Spindelteller sind mit einem Elastomer beschichtet, um die Dichtwirkung am Ventilsitz zu erhöhen. Durch die Drehung des Spindeltellers wird jedoch das Elastomer zusätzlich belastet, wodurch dessen Lebensdauer und/oder Dichtheit reduziert ist.

Vor diesem Hintergrund liegt der vorliegenden Erfindung die Aufgabe zugrunde, ein kompaktes Ventil mit verbesserter Dichtwirkung bereitzustellen.

Diese Aufgabe wird durch ein Ventil mit den Merkmalen des Anspruchs 1, und durch einen Druckbehälter mit den Merkmalen des Anspruchs 12 gelöst.

Gemäß einem ersten Aspekt zum besseren Verständnis der vorliegenden Offenbarung umfasst ein Ventil für eine Fluidleitung einen ersten Gehäuseabschnitt, der einen Ventilsitz bildet, und einen Spindelteller, der dazu eingerichtet ist, von einer Schließstellung zu einer Offenstellung bewegt zu werden. In der Offenstellung ist der Spindelteller von dem Ventilsitz beabstandet, sodass ein Fluid durch die Fluidleitung strömen kann. In der Schließstellung verschließt der Spindelteller hingegen die Fluidleitung am Ventilsitz. Bei dem Fluid kann es sich um eine Flüssigkeit oder ein Gas oder eine Mischung aus beidem handeln. Beispielsweise kann ein lagerfähiger Treibstoff, insbesondere unter Druck, durch die Fluidleitung geführt werden und durch das Ventil gesperrt werden. Dabei kann das Fluid Temperaturen zwischen -50 °C und +100 °C, vorzugsweise -40 °C bis +65 °C einnehmen. Ferner kann es sich auch um ein tiefkaltes Fluid (bis -196°C) handeln.

Der Spindelteller ist ferner dazu eingerichtet, ein ringförmiges Dichtelement aufzunehmen, das in der Schließstellung des Spindeltellers an einem ersten Abschnitt des Ventilsitzes anliegt. Das ringförmige Dichtelement bildet eine ringförmige Dichtfläche mit dem ersten Abschnitt des Ventilsitzes. Im Vergleich zu bekannten tellerförmigen Elastomeren ist die Auflagefläche des ringförmigen Dichtelements auf dem Ventilsitz klarer definiert, wodurch die Dichtfläche am Ventilsitz auf das ringförmige Dichtelement besser abgestimmt werden kann. Beispielsweise kann der erste Abschnitt des Ventilsitzes ein ringförmiger Abschnitt sein, der dem ringförmigen Dichtelement entspricht oder in radialer Richtung (nach innen und/oder nach außen) ein wenig größer ausgebildet ist. Die Flächen am Ventilsitz und an dem Dichtelement können auch aufeinander abgestimmt sein, sodass korrespondierende Flächen aufeinandertreffen, wenn das Ventil geschlossen wird. Dadurch wird die Dichtwirkung verbessert. Ebenfalls im Vergleich zu bekannten tellerförmigen Elastomeren lässt sich eine gegebenenfalls vorhandene Drehung des Spindeltellers beim Erreichen der Schließstellung besser durch das ringförmige Dichtelement bewerkstelligen.

Ferner umfasst der Spindelteller mindestens einen Abschnitt, der in der Schließstellung des Spindeltellers an einem zweiten Abschnitt des Ventilsitzes anliegt. Der mindestens eine Abschnitt des Spindeltellers unterscheidet sich von dem ringförmigen Dichtelement, ist also beispielsweise benachbart zu dem ringförmigen Dichtelement angeordnet. Durch das Anliegen des Spindeltellers an zumindest einem Abschnitt des Ventilsitzes wird eine zusätzliche Dichtwirkung geschaffen. Beispielsweise kann der mindestens eine Abschnitt des Spindeltellers eine Form aufweisen, die zu der Form des zweiten Abschnitts des Ventilsitzes korrespondiert. Mit anderen Worten kommt der mindestens eine Abschnitt des Spindeltellers auf einem korrespondierenden Abschnitt des Ventilsitzes zu liegen. Somit verschließt der Spindelteller auch in dem mindestens einen Abschnitt die Fluidleitung. Sollte es zu einer Undichtigkeit am ringförmigen Dichtelement kommen, wäre die Dichtwirkung des Ventils noch weiterhin gegeben.

Beispielsweise kann das Dichtelement aus einem Kunststoff hergestellt sein. Hierfür eignen sich insbesondere Elastomere. Der gewählte Kunststoff für das Dichtelement sollte für das in der Fluidleitung zu führende bzw. abzusperrende Fluid geeignet sein und keine chemischen Reaktionen damit eingehen. Das Dichtelement kann zum Beispiel aus Polychlortrifluorethylen (PCTFE), Polytetrafluorethylen (PTFE), Perfluorelastomer (FFKM) oder Ethylen-Propylen-Dien-Kautschuk (EPDM) hergestellt sein.

Der Spindelteller sowie der Ventilsitz (zumindest dessen zweiter Abschnitt) können aus Metall und/oder einer Metalllegierung gefertigt sein. Im Bereich des zweiten Abschnitts des Ventilsitzes sowie dem korrespondierenden Bereich des Spindeltellers kann der Ventilsitz und/oder der Spindelteller auch mit einem Metall und/oder einer Metalllegierung beschichtet sein, das/die für eine effiziente Dichtwirkung geeignet ist. Lediglich als Beispiel kann der Spindelteller sowie zu diesem Bauteil gehörende Abschnitte aus austenitischen Chrom-Nickel-Stählen der V2A und V4A Reihe hergestellt sein. Gleiches gilt für den ersten Gehäuseabschnitt, der den Ventilsitz bildet.

Wenn der mindestens eine Abschnitts des Spindeltellers, der an dem zweiten Abschnitt des Ventilsitzes anliegt, aus einem Metall und/oder einer Metalllegierung gefertigt ist, wird eine Anpresskraft des Spindeltellers auf den Ventilsitz in der Schliessstellung des Spindeltellers hauptsächlich durch diese beiden Abschnitte des Spindeltellers und des Ventilsitzes übertragen. Dadurch wird eine Verformung des ringförmigen Dichtelements begrenzt. Dies führt zu einer erhöhten Lebensdauer des ringförmigen Dichtelements, da dies weniger stark durch die Anpresskraft des Spindeltellers auf den Ventilsitz belastet wird.

Der mindestens eine Abschnitt des Spindeltellers, der eine Dichtwirkung mit dem zweiten Abschnitt des Ventilsitzes erzielt, ist insbesondere ein durchgängig umlaufender Abschnitt. Ebenso ist der zweite Abschnitt des Ventilsitzes durchgängig umlaufend, sodass bei der Berührung der beiden Abschnitte des Spindeltellers bzw. Ventilsitzes eine durchgängig umlaufende Dichtfläche vorliegt. Bevorzugt haben der mindestens eine Abschnitt des Spindeltellers und der korrespondierende zweite Abschnitt des Ventilsitzes jeweils eine geschlossene Form, zum Beispiel ringförmig, polygonal oder ähnlich. Ferner kann diese Form einen Teil der Fluidleitung umgeben, um diese zu verschließen.

In einer Implementierungsvariante kann ein stirnseitiger Abschnitt des Spindeltellers in der Schließstellung des Spindeltellers an dem zweiten Abschnitt des Ventilsitzes fluiddicht anliegen. Stirnseitig bedeutet hier eine Fläche, die im Wesentlichen senkrecht zu einer Bewegungsrichtung des Spindeltellers zwischen Offenstellung und Schließstellung liegt. Dadurch kann eine Dichtwirkung des Spindeltellers am Ventilsitz gleichmäßig während des Schließvorganges (Bewegung von der Offenstellung zur Schließstellung des Spindeltellers) erzielt werden. Ferner lässt sich eine auf den Spindelteller wirkende Kraft beim Schließen des Ventils auf den Ventilsitz übertragen, ohne dass es zu seitlichen Auslenkungen des Spindeltellers gegenüber dem Ventilsitz kommt.

In einer weiteren Implementierungsvariante kann der Ventilsitz zumindest einen ersten Abschnitt der Fluidleitung bilden. Beispielsweise kann an dem Ventilsitz eine Öffnung vorhanden sein, die in den ersten Abschnitt der Fluidleitung mündet. Mit anderen Worten endet der erste Abschnitt der Fluidleitung an der Öffnung des Ventilsitzes. Dabei kann der Ventilsitz so gestaltet sein, dass eine Achse des ersten Abschnitts der Fluidleitung senkrecht zu dem Spindelteller verläuft. Bei der Achse des ersten Abschnitts der Fluidleitung handelt es sich zum Beispiel um eine Mittelachse einer rotationsymmetrischen Fluidleitung.

Ferner kann der Spindelteller stirnseitig stufenförmig ausgebildet sein und ein innerer Abschnitt der Stirnseite des Spindeltellers weiter zu dem Ventilsitz ragen. Dieser innere Abschnitt der Stirnseite des Spindeltellers ragt von übrigen Abschnitten der Stirnseite des Spindeltellers in Richtung des Ventilsitzes hervor. Mit anderen Worten bildet der innere Abschnitt einen Vorsprung (in Bewegungsrichtung des Spindeltellers erstreckend) gegenüber dem übrigen Spindelteller außerhalb des inneren Abschnitts (in Radialrichtung betrachtet).

Dabei kann in der Schließstellung des Spindeltellers der innere Abschnitt des Spindeltellers in den ersten Abschnitt der Fluidleitung ragen. Mit anderen Worten weist der innere Abschnitt eine Form auf, die einer Form des ersten Abschnitts der Fluidleitung entspricht. Beispielsweise kann die Form des inneren Abschnitts der Stirnseite des Spindeltellers dem Inneren des ersten Abschnitts der Fluidleitung am Ventilsitz entsprechen und das von dem ersten Abschnitt der Fluidleitung definierte Volumen zumindest teilweise ausfüllen.

In noch einer weiteren Implementierungsvariante kann der innere Abschnitt des Spindeltellers eine umlaufende Seitenfläche aufweisen, die mit einer Innenseite des ersten Abschnitts der Fluidleitung korrespondiert und in der Schließstellung des Spindeltellers an der Innenseite des ersten Abschnitts der Fluidleitung fluiddicht anliegt. Beispielsweise kann der als Vorsprung ausgebildete innere Abschnitt des Spindeltellers eine äußere, umlaufende Seitenfläche aufweisen, die mit der Innenseite des ersten Abschnitts der Fluidleitung korrespondiert. Die Maße des inneren Abschnitts des Spindeltellers und des ersten Abschnitts der Fluidleitung sind in etwa gleich groß, sodass der innere Abschnitt des Spindeltellers in die Fluidleitung bewegt werden kann und wieder heraus bewegt werden kann, jedoch eine Berührung zwischen dem inneren Abschnitt des Spindeltellers und der Innenseite des ersten Abschnitts der Fluidleitung möglich ist. Dadurch kann eine Dichtfläche, die durch den mindestens einen Abschnitt des Spindeltellers und den zweiten Abschnitt des Ventilsitzes gebildet wird, vergrößert werden.

In einer optionalen Ausgestaltung ist der innere Abschnitt des Spindeltellers leicht konisch geformt, während die Innenseite des ersten Abschnitts der Fluidleitung, insbesondere am Ventilsitz, zylindrisch ist oder zylindrisch mit einer gefasten Kante am Ventilsitz ist oder zumindest am Ventilsitz leicht konisch geformt ist (entsprechend einer konischen Form des inneren Abschnitts des Spindeltellers).

In einer weiteren Implementierungsvariante kann der Spindelteller einen stirnseitig angeordneten, äußeren umlaufenden Abschnitt aufweisen, der das ringförmige Dichtelement außenseitig umgibt und dazu eingerichtet ist, das ringförmige Dichtelement kraftschlüssig festzuhalten. Mit anderen Worten kann der Spindelteller einen umlaufend angeordneten Steg aufweisen, der das ringförmige Dichtelement außenseitig umgibt. Beispielsweise kann der Spindelteller eine umlaufende Nut umfassen, die in Radialrichtung nach außen hin durch den äußeren umlaufenden Abschnitt (Steg) begrenzt ist. Nach Einsetzen des ringförmigen Dichtelements in die Nut kann der Steg das ringförmige Dichtelement kraftschlüssig festhalten.

Zum Beispiel kann das ringförmige Dichtelement ein größeres Volumen aufweisen, als die Nut in dem Spindelteller, wodurch eine elastische Verformung des ringförmigen Dichtelements erfolgt, wenn das ringförmige Dichtelement in die Nut eingesetzt wird. Die elastischen Kräfte des ringförmigen Dichtelements auf den äußeren umlaufenden Abschnitt (und optional auch auf einen innenliegenden Abschnitt des Spindeltellers) führen so zu einem kraftschlüssigen Halt des ringförmigen Dichtelements im Spindelteller.

Alternativ oder zusätzlich kann der äußere umlaufende Abschnitt (Steg) des Spindeltellers in Radialrichtung nach innen gedrückt werden, nachdem das ringförmige Dichtelement in die Nut eingesetzt wurde. Beispielsweise kann der äußere umlaufende Abschnitt des Spindeltellers in Radialrichtung nach innen durch Taumeln oder ein ähnliches Verfahren, vorzugsweise durch Taumeln mittels einer Kugel, bearbeitet werden. Dies kann mit einer elastischen Verformung, aber auch einer plastischen Verformung, des äußeren umlaufenden Abschnitts (Stegs) einhergehen, wodurch das ringförmige Dichtelement kraftschlüssig festgehalten wird.

In einer weiteren Implementierungsvariante kann das Ventil einen ersten Spindelteil, an dem der Spindelteller ausgebildet ist, und einen Dichtkranz (ein weiteres Dichtelement) umfassen. Dabei kann der Dichtkranz eine Öffnung, durch die der erste Spindelteil ragt, und eine Dichtfläche, die ein dem Ventilsitz gegenüberliegendes Ende des ersten Gehäuseabschnitts fluiddicht verschließt, aufweisen. Mit anderen Worten bildet der Dichtkranz einen fluiddichten Deckel für den ersten Gehäuseabschnitt, der dem Ventilsitz gegenüberliegt, wobei in dem Deckel eine Öffnung für den ersten Spindelteil vorgesehen ist. Gegenüber dem ersten Spindelteil ist der dicht kann ebenfalls abdichtend, sodass das von dem Ventil abzusperrende Fluid nicht zwischen dem Dichtkranz (Deckel) und dem ersten Spindelteil nach außen gelangen kann.

In noch einer weiteren Implementierungsvariante kann das Ventil einen Faltenbalg, der den ersten Spindelteil umgibt, umfassen. Der Faltenbalg kann in Längsrichtung des ersten Spindelteils flexibel ausgestaltet sein. Beispielsweise kann der Faltenbalg aus einem Metall (einer Metallfolie) gefaltet werden, die in Umfangsrichtung durchgängig ist. Mit anderen Worten kann der Faltenbalg eine im Wesentlichen zylindrische Form aufweisen, wobei in Längsrichtung des Faltenbalgs zumindest in mindestens einem Abschnitt Faltungen vorgesehen sind, die zu der Flexibilität in Längsrichtung beitragen.

Ferner kann der Faltenbalg an einem ersten seiner Enden fluiddicht an dem Spindelteller befestigt sein und an einem zweiten Ende, das dem ersten Ende gegenüberliegt, fluiddicht an dem Dichtkranz befestigt sein. Dadurch dichtet der Faltenbalg den ersten Spindelteil hermetisch gegenüber einem Innenraum des ersten Gehäuseabschnitts ab. Fluiddicht bedeutet hier, dass der Faltenbalg an dem Spindelteller bzw. dem Dichtkranz so befestigt ist, dass das durch die Fluidleitung strömende Fluid nicht in das Innere des Faltenbalgs eindringen kann, insbesondere im Hinblick auf den Druck und/oder die Temperatur, die das strömende Fluid aufweisen kann.

In einer anderen Implementierungsvariante kann das Ventil ferner einen zweiten Gehäuseabschnitt, der an einem dem Ventilsitz zugewandten Ende einen Flansch aufweist, umfassen. Der zweite Gehäuseabschnitt kann so dimensioniert sein, dass der erste Spindelteil zumindest abschnittsweise im Inneren des zweiten Gehäuseabschnitts aufgenommen werden kann. Der Flansch stellt eine Aufweitung des zweiten Gehäuseabschnitts in Radialrichtung dar, insbesondere eine Aufweitung nach außen.

Ferner kann das Ventil einen Druckring umfassen, der dazu eingerichtet ist, an dem ersten Gehäuseabschnitt befestigt zu werden und den zweiten Gehäuseabschnitt zumindest abschnittsweise zu umgeben. Beispielsweise kann der Druckring so geformt sein, dass der Flansch des zweiten Gehäuseabschnitts, wenn der Druckring an dem ersten Gehäuseabschnitt befestigt ist, auf einer der Dichtfläche des Dichtkranzes gegenüberliegenden Seite des Dichtkranzes anliegt und der Dichtkranz zwischen dem Flansch und dem dem Ventilsitz gegenüberliegenden Ende des ersten Gehäuseabschnitts eingeklemmt ist.

Mit anderen Worten ist eine im Inneren des Druckrings vorhandene Öffnung so groß, dass sich der zweite Gehäuseabschnitt mit Ausnahme des Flansches darin bewegen kann. Beispielsweise kann die Öffnung des Druckrings kreisförmig oder zylindrisch sein und einen Radius aufweisen, der (zumindest ein wenig) größer ist als ein Radius einer ebenfalls beispielsweise kreisförmigen oder zylindrisch gestalteten Außenseite des zweiten Gehäuseabschnitts, der aber kleiner ist als ein Außenradius des ebenfalls beispielsweise kreisförmigen oder zylindrisch gestalteten Flansches. Selbstverständlich kann die Öffnung des Druckrings, die Außenseite des zweiten Gehäuseabschnitts und/oder die Außenseite des Flansches oval oder mehreckig (beispielsweise 4-eckig oder 5-eckig oder anderweitig polygonal) sein. Auf jeden Fall kann der Druckring über den zweiten Gehäuseabschnitt gestülpt werden und entlang des zweiten Gehäuseabschnitts bewegt werden, bis der Druckring am Flansch anliegt.

Die Befestigung des Druckrings am ersten Gehäuseabschnitt kann beispielsweise durch mindestens eine Schraube oder Bolzen erfolgen. Zum Beispiel kann der Druckring mindestens eine Öffnung aufweisen, durch die jeweils eine Schraube oder ein Bolzen geführt werden kann, der in einer entsprechenden Öffnung im ersten Gehäuseabschnitt aufgenommen werden kann. Dabei kann in der Öffnung im ersten Gehäuseabschnitt ein Gewinde vorgesehen sein, in das die Schraube eingedreht wird, oder die Schraube wird über eine Mutter auf der anderen Seite des ersten Gehäuseabschnitts befestigt oder der Bolzen wird über einen Sicherungsstift auf der anderen Seite des ersten Gehäuseabschnitts befestigt.

Alternativ kann der Druckring in einem Abschnitt, der mit dem ersten Gehäuseabschnitt überlappt, auch ein Innengewinde aufweisen, dass zu einem an dem ersten Gehäuseabschnitt in dem Überlappungsbereich angebrachten Außengewinde korrespondiert. Somit kann der Druckring auf den ersten Gehäuseabschnitt aufgeschraubt werden, während der Druckring auf dem Flansch des zweiten Gehäuseabschnitts aufliegt und den zweite Gehäuseabschnitt auf den ersten Gehäuseabschnitt zubewegt.

Der Dichtkranz ist dabei so dimensioniert, dass er in einen Zwischenraum zwischen dem ersten Gehäuseabschnitt und dem Flansch ragt. Bei Befestigung des Druckrings an dem ersten Gehäuseabschnitt wird der Flansch auf den Teil des Dichtkranzes gepresst, der in den Zwischenraum ragt.

Ein so gestaltetes Ventil lässt sich in einfacher Weise zusammenbauen, während die Dichtwirkung gewährleistet ist. Ferner kann eine Aufbauhöhe des Ventils, insbesondere des ersten Gehäuseabschnitts, begrenzt werden, da lediglich Platz für den Spindelteller und zumindest einen Abschnitt des ersten Spindelteils mit dem optionalen Faltenbalg geschaffen werden muss.

In einer weiteren Implementierungsvariante kann der Dichtkranz so geformt sein, dass eine umlaufende Außenseite des Dichtkranzes an einem Teil des ersten Gehäuseabschnitts und an einem Teil des Druckrings in einem Bereich anliegt, an dem der Druckring den ersten Gehäuseabschnitt berührt. Mit anderen Worten weisen der erste Gehäuseabschnitt und der Druckring eine Berührungsfläche auf, die den Dichtkranz umgibt, wobei der erste Gehäuseabschnitt und der Druckring jeweils eine Innenkante an der Berührungsfläche aufweisen, die beide an der umlaufenden Außenseite des Dichtkranzes anliegen. Dadurch wird ein Innenraum des ersten und zweiten Gehäuseabschnitts im Bereich des Druckrings nach außen hin abgedichtet.

In noch einer weiteren Implementierungsvariante kann der erste Gehäuseabschnitt eine Ventilkammer mit einer Auslassöffnung, an der ein zweiter Abschnitt der Fluidleitung beginnt, bilden. Bei der Ventilkammer handelt es sich um einen Bereich in dem ersten Gehäuseabschnitt, durch den das Fluid strömt, wenn sich der Spindelteller in seiner Offenstellung befindet. Die Ventilkammer kann somit auch als Abschnitt der Fluidleitung betrachtet werden. Hauptsächlich bietet die Ventilkammer Arbeitsraum für den Hub des Spindeltellers, genügend Querschnittsfläche für eine ausreichende Durchströmung durch das Fluid, und genügend Aufbauhöhe, um die Auslassöffnung vorzusehen.

Ferner kann die Auslassöffnung zumindest abschnittsweise in einem Bereich der Ventilkammer, der auf einer dem Ventilsitz abgewandten Seite des Spindeltellers liegt, angeordnet sein. Mit anderen Worten muss das Fluid den Spindelteller, in seiner Offenstellung, zumindest teilweise umströmen, bevor es die Ventilkammer durch die Auslassöffnung in Richtung des zweiten Abschnitts der Fluidleitung verlässt. Selbstverständlich kann die Auslassöffnung auch in einem Bereich der Ventilkammer angeordnet sein, der sich vollständig (in Strömungsrichtung des Fluids betrachtet) hinter dem Spindelteller befindet.

Durch die Umströmung des Spindeltellers kann vermieden werden, dass der Spindelteller oder das Fluid in Schwingung gerät. Wäre beispielsweise die Auslassöffnung in einem Bereich (sehr) nah am Ventilsitz angeordnet, würde das Fluid bereits bei leicht geöffnetem Spindelteller vermehrt in die Richtung der Auslassöffnung strömen. Dadurch entsteht eine asymmetrische Umströmung des Spindeltellers, die eine Schwingung des Fluids und/oder des Spindeltellers bewirkt, die nicht nur störend ist, sondern auch die Lebensdauer des Ventils beeinträchtigen kann.

In noch einer weiteren Implementierungsvariante kann der zweite Abschnitt der Fluidleitung eine Achse aufweisen, die schräg zu einer Achse des ersten Abschnitts der Fluidleitung liegt. Mit anderen Worten kann das Ventil so gestaltet sein, dass ein Einlass (erster Abschnitt der Fluidleitung) in eine andere Richtung zeigt als der Auslass (zweiter Abschnitt der Fluidleitung). Beispielsweise kann das Ventil ein Eckventil bilden.

Insbesondere kann die Achse des zweiten Abschnitts der Fluidleitung in Ausströmrichtung des Fluids einen spitzen Winkel zur Achse des ersten Abschnitts der Fluidleitung bilden. Mit anderen Worten hat die Strömungsrichtung (Ausströmrichtung) des Fluids aus der Ventilkammer heraus eine Richtungskomponente, die der Strömungsrichtung (Einströmungsrichtung) des Fluids in die Ventilkammer entgegen liegt. Dadurch können der Einlass des Ventils und der Auslass des Ventils sehr nahe beieinanderliegen, wodurch eine sehr kompakte Bauweise des Ventils erzielt wird.

Optional kann der zweite Abschnitt der Fluidleitung auch eine Biegung oder einen Knick umfassen, sodass ein Auslass des Ventils in einem bestimmten Winkel zu einem Einlass des Ventils angeordnet sein kann. Insbesondere können der Einlass und der Auslass des Ventils in einem rechten Winkel zueinander angeordnet sein. Durch den schrägen Verlauf zumindest eines anfänglichen Teils des zweiten Abschnitts der Fluidleitung (der Abschnitt dessen Achse einen spitzen Winkel aufweist) wird der Auslass des Ventils dennoch näher an den Einlass des Ventils gebracht, während Schwingungen in dem Ventil weiterhin vermieden werden.

Dies ermöglicht nicht nur eine kompakte Bauform des Ventils, sondern auch die Bereitstellung eines Eckventils. Ein solches Ventil kann beispielsweise auf standardisierte Druckbehälter (Gasflaschen) aufgesetzt werden und ferner durch eine standardisierte Ventilschutzkappe bedeckt und geschützt werden.

Alternativ kann auch der erste Abschnitt der Fluidleitung eine Biegung oder einen Knick umfassen, sodass in Einströmrichtung des Fluids ein erster Teil des ersten Abschnitts der Fluidleitung eine Achse aufweist, die schräg zu einem zweiten Teil des ersten Abschnitts der Fluidleitung liegt. Beispielsweise kann die Achse des ersten Teils des ersten Abschnitts einen spitzen Winkel zu dem zweiten Teil des ersten Abschnitts der Fluidleitung aufweisen. In einer bestimmten Ausgestaltung kann die Achse des ersten Teils des ersten Abschnitts der Fluidleitung parallel zu dem (in Ausströmrichtung betrachtet) ersten Teil des zweiten Abschnitts der Fluidleitung verlaufen. Dadurch können ein Einlass und ein Auslass des Ventils parallel zueinander angeordnet sein oder sogar eine gemeinsame Achse aufweisen. Mit anderen Worten kann das Ventil auch als Durchgangsventil ausgebildet sein.

Die Ventilkammer wird ferner durch den Dichtkranz und dessen fluiddichte Verbindung zu dem Ende des ersten Gehäuseabschnitts definiert. Ebenfalls im Inneren der Ventilkammer befindet sich der Faltenbalg. Der Faltenbalg trennt somit das Innere des ersten Gehäuseabschnitts in ein medienseitiges Volumen, durch das das Fluid strömen kann, und ein spindelseitiges Volumen, in dem sich der erste Spindelteil befindet. Dadurch kann das medienseitige Volumen vor eventuell eingesetzten Schmierstoffen oder auch Abrieb an dem ersten Spindelteil oder anderen Ventilkomponenten geschützt werden.

Optional kann das spindelseitige Volumen über Öffnungen durch den Dichtkranz, durch den ersten Spindelteil und/oder durch den zweiten Gehäuseabschnitt von außen mit einem Schutzgas befüllt werden. Das Schutzgas kann auch beheizt werden, um die Ventilkomponenten vor einem Einfrieren zu schützen, insbesondere bei tiefkalten Fluiden, die durch das Ventil geführt werden.

Alternativ und ebenfalls optional kann das Schutzgas, insbesondere spindelseitig, gekühlt sein, um ein durch das Ventil (die Ventilkammer) strömendes Fluid vor Erwärmung oder Temperaturverlust zu schützen. Ebenso kann die gesamte Spindel vor ungewollten Temperatureinflüssen durch das Fluid oder auch vor Temperatureinflüssen aus der Umgebung geschützt werden.

Selbstverständlich kann auch optional bei geschlossenem Ventil das medienseitige Volumen der Ventilkammer durch ein Schutzgas von außen befüllt werden, sofern entsprechende Öffnungen durch den Dichtkranz, durch den ersten Spindelteil und/oder den ersten Gehäuseabschnitt vorhanden sind. Eine solche Befüllung mit Schutzgas kann ebenfalls der Erwärmung von Ventilkomponenten dienen, kann aber auch dem Schutz der dem medienseitigen Volumen zugewandten Ventilkomponenten (zum Beispiel ringförmiges Dichtelement, erster Spindelteil, Faltenbalg, Verbindungsstellen zwischen Faltenbalg und Spindelteil, etc.) dienen, da nach Schließen des Ventils Reste des Fluids aus dem medienseitigen Volumen ausgespült und durch Schutzgas ersetzt werden können.

In einer anderen Implementierungsvariante kann das Ventil ferner einen zweiten Spindelteil umfassen, der zumindest drehbar mit dem ersten Spindelteil gekoppelt ist. Dadurch kann eine relative Drehbewegung zwischen dem ersten Spindelteil und dem zweiten Spindelteil ermöglicht werden, wodurch insbesondere eine Drehbewegung eines Spindelteils, beispielsweise des zweiten Spindelteils, von dem anderen Spindelteil entkoppelt ist.

Zum Beispiel kann der erste Spindelteil in dem ersten Gehäuseabschnitt und/oder dem zweiten Gehäuseabschnitt so gelagert sein, dass er sich in Längsrichtung des ersten und zweiten Gehäuseabschnitts bewegt. Der zweite Spindelteil kann wiederum in dem zweiten Gehäuseabschnitt und/oder dem ersten Gehäuseabschnitt so gelagert sein, dass er durch Drehen eine Bewegung in Längsrichtung des ersten und zweiten Gehäuseabschnitts ausführt.

In einem weiteren Beispiel kann der zweite Spindelteil ein Außengewinde aufweisen, dass mit einem Innengewinde, welches zum Beispiel in dem zweiten Gehäuseabschnitt vorgesehen ist, korrespondiert. Wird der zweite Spindelteil nun in dem Innengewinde des zweiten Gehäuseabschnitts gedreht, bewegt sich der zweite Spindelteil auch in Längsrichtung des zweiten Gehäuseabschnitts (die mit der Längsrichtung des zweiten Spindelteils übereinstimmt). Die Drehbewegung des zweiten Spindelteils wird dabei nicht auf das erste Spindelteil übertragen, dafür jedoch die Bewegung in Längsrichtung des zweiten Gehäuseabschnitts bzw. Längsrichtung des zweiten Spindelteils. Dadurch wird eine Längsbewegung des ersten Spindelteils (in Längsrichtung des ersten und zweiten Gehäuseabschnitts bzw. in Längsrichtung des ersten Spindelteils) bedingt.

Beispielsweise kann der erste Spindelteil durch Drehen des zweiten Spindelteils so bewegt werden, dass der Spindelteller auf den Ventilsitz aufgesetzt und aufgedrückt wird, wodurch das Ventil verschlossen wird. Durch entgegengesetztes Drehen des zweiten Spindelteils bewegt sich das zweite Spindelteil von dem ersten Spindelteil weg. Der erste Spindelteil kann nun den Spindelteller wieder von dem Ventilsitz entfernen. Dies kann beispielsweise durch einen Druck des Fluids, welches durch die Fluidleitung strömen möchte, bewirkt werden. Alternativ oder zusätzlich kann der erste Spindelteil mit einem Federelement gekoppelt sein, welches eine Kraft auf den ersten Spindelteil ausübt, die den ersten Spindelteil zu dem zweiten Spindelteil drückt, und somit den Spindelteller vom Ventilsitz wegdrückt.

In noch einer anderen Implementierungsvariante kann das Ventil ferner einen Aktuator umfassen, der dazu eingerichtet ist, den zweiten Spindelteil zu drehen. Bei dem Aktuator kann es sich einerseits um einen Motor handeln. Andererseits kann der Aktuator auch durch einen Handgriff implementiert sein, der drehfest mit dem zweiten Spindelteil verbunden ist.

Gemäß einem weiteren Aspekt zum besseren Verständnis der vorliegenden Offenbarung umfasst ein Druckbehälter für ein Fluid mindestens ein Ventil gemäß dem ersten Aspekt oder einer der zugehörigen Implementierungsvarianten und optionalen Ausgestaltungen.

Bei dem Druckbehälter kann es sich beispielsweise um standardisierte Gasdruckbehälter handeln, die einen ebenfalls standardisierten Ventilanschluss aufweisen. Zum Beispiel kann der Druckbehälter einen 25E-Anschluss (z.B. gemäß DIN 477 ISO 11363) aufweisen. Das mindestens eine Ventil kann, beispielsweise an dem ersten Gehäuseabschnitt, einen korrespondierenden 25E-Anschluss (DIN EN 629-1) aufweisen, sodass sich das Ventil als Standardabschlussorgan für Standarddruckbehälter einsetzen lässt.

Die oben beschriebenen Ausgestaltungen und Varianten können selbstverständlich kombiniert werden, ohne dass dies explizit beschrieben ist. Jede der beschriebenen Ausgestaltungsvarianten ist somit optional zu jeder Ausgestaltungsvariante oder bereits Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

Bevorzugte Ausführungsformen der Erfindung werden nun anhand der beigefügten schematischen Zeichnungen näher erläutert, wobei
- Figur 1: schematisch eine perspektivische Ansicht eines beispielhaften Ventils zeigt;
- Figur 2: schematisch eine Schnittansicht des Ventils aus Figur 1 zeigt;
- Figur 3: schematisch eine Schnittansicht eines ersten Gehäuseabschnitts eines Ventils zeigt;
- Figur 4: schematisch eine Schnittansicht eines Spindeltellers und eines Teils einer Spindel eines Ventils zeigt;
- Figur 5: schematisch eine Schnittansicht eines Dichtkranzes für ein Ventil zeigt;
- Figur 6: schematisch eine Schnittansicht eines zweiten Gehäuseabschnitts eines Ventils zeigt;
- Figur 7: schematisch eine perspektivische Ansicht eines weiteren beispielhaften Ventils zeigt; und
- Figur 8: schematisch eine Schnittansicht eines Abschnitts des Ventils aus Figur 7 zeigt.

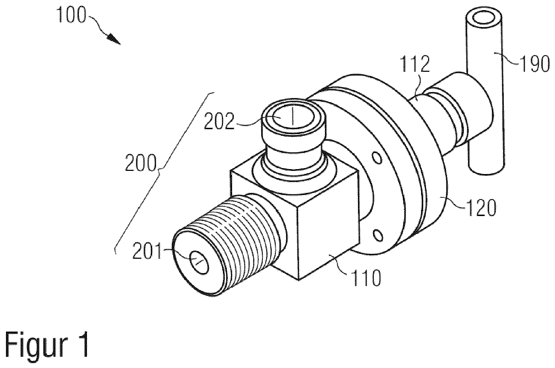

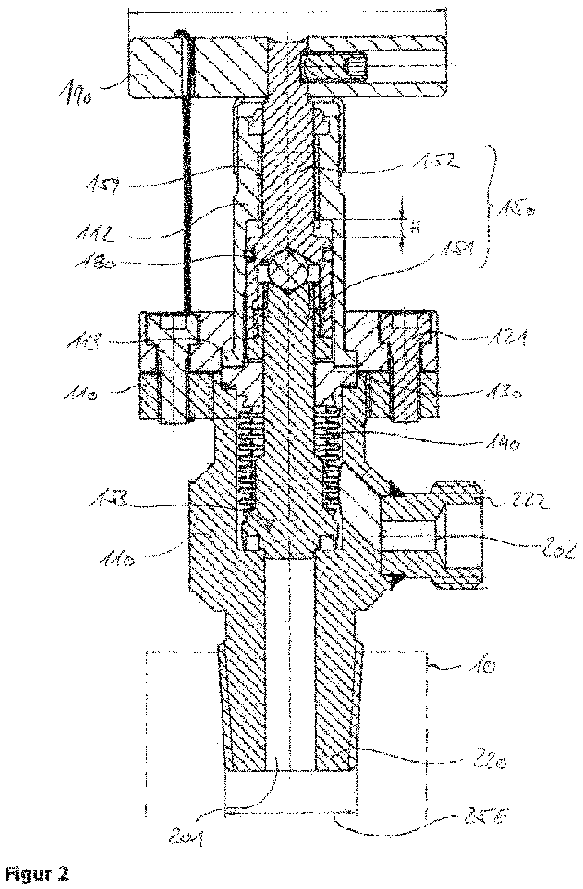

Figur 1 zeigt schematisch eine perspektivische Ansicht eines beispielhaften Ventils 100. Das Ventil 100 ist dazu eingerichtet, eine Fluidleitung 200 abzusperren, das heißt fluiddicht zu verschließen. Bei dem Fluid kann es sich um eine Flüssigkeit, ein Gas oder eine Kombination daraus handeln, wobei das Fluid für gewöhnlich unter Druck in einen ersten Abschnitt 201 der Fluidleitung 200 strömt, beispielsweise aus einem Drucktank 10 (in Figur 2 gestrichelt angedeutet). Bei geöffnetem Ventil 100 durchströmt das Fluid das Absperrorgan in dem Ventil 100 und tritt durch einen zweiten Abschnitt 202 der Fluidleitung 200 aus.

Das Ventil 100 kann einen ersten Gehäuseabschnitt 110 umfassen, in dem das eigentliche Absperrorgan des Ventils 100 angeordnet ist. In den Figuren 2 bis 4 sind schematisch Schnittansichten des Ventils 100 gezeigt. Demnach bildet der erste Gehäuseabschnitt 110 einen Ventilsitz 115, der dazu eingerichtet ist, einen feststehenden Teil des Absperrorgans des Ventils 100 zu bilden.

Ein beweglicher Teil des Absperrorgan des Ventils 100 wird durch einen Spindelteller 153 gebildet, der dazu eingerichtet ist, von einer Schließstellung (siehe Figur 2) in eine Offenstellung bewegt zu werden. In der Schließstellung wird das Fluid daran gehindert, den ersten Abschnitt 201 der Fluidleitung 200 zu verlassen. In der Offenstellung des Spindeltellers 153 hingegen kann das Fluid durch den ersten Abschnitt 201 der Fluidleitung 200 strömen, den Spindelteller 153 passieren und durch den zweiten Abschnitt 202 der Fluidleitung 200 hinausströmen.

Ferner ist der Spindelteller 153 dazu eingerichtet, ein ringförmiges Dichtelement 160 aufzunehmen. Das ringförmige Dichtelement 160 liegt in der Schliessstellung des Spindeltellers 153 an einem ersten Abschnitt 116 des Ventilsitzes 115 an. Das ringförmige Dichtelement 160 kann aus einem elastischen Material, beispielsweise einem Kunststoff, hergestellt sein und dazu eingerichtet sein, mit dem ersten Abschnitt 116 des Ventilsitzes 115 eine Dichtwirkung gegenüber dem Fluid zu haben.

Beispielsweise kann der Spindelteller 153 einen stirnseitig angeordneten äußeren umlaufenden Abschnitt 156 aufweisen, der das ringförmige Dichtelement 160 außenseitig umgibt. Der äußere umlaufende Abschnitt 156 kann dazu eingerichtet sein, das ringförmige Dichtelement 160 kraftschlüssig festzuhalten. Hierzu kann das ringförmige Dichtelement 160 in eine Nut in dem Spindelteller 153 eingesetzt werden, und anschließend der umlaufende Abschnitt 156 des Spindelteller 153 in Radialrichtung nach innen festgedrückt werden. Dies kann neben einer elastischen Verformung optional auch mit einer plastischen Verformung des Abschnitts 156 des Spindeltellers 153 einhergehen, wodurch ein formschlüssiger und kraftschlüssiger Halt für das ringförmige Dichtelement 160 hergestellt wird.

Zusätzlich weist der Spindelteller 153 mindestens einen Abschnitt 154 - 157 auf, der in der Schliessstellung des Spindeltellers 153 an einem zweiten Abschnitt 116, 117 des Ventilsitzes 115 anliegt. So kann der Spindelteller 153 einen stirnseitigen Abschnitt 154, 156, 157 aufweisen, der an einem entsprechenden Abschnitt 116, 117 des Ventilsitzes 115 anliegen kann. Dadurch kann eine zusätzliche Dichtwirkung (zusätzlich zu dem ringförmigen Dichtelement 160) erzielt werden. Insbesondere wenn der Spindelteller 153 und der Ventilsitz 115 aus einem metallischen Material gefertigt sind, lässt sich ein sicherer Sitz des Spindeltellers 153 auf/in dem Ventilsitz 115 bewerkstelligen. Dadurch wird auch das ringförmige Dichtelement 160 geschont, da es in der Schliessstellung des Spindeltellers 153 fast immer die gleiche elastische Verformung erfährt.

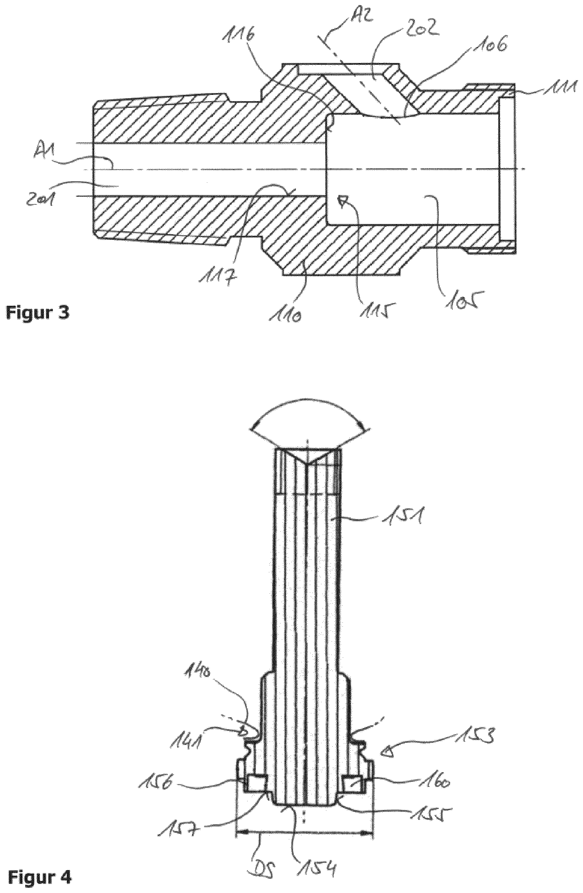

Optional kann der Spindelteller 153 stirnseitig stufenförmig ausgebildet sein (siehe insbesondere Figur 4). Mit anderen Worten kann ein Teil des Spindeltellers 153 an dessen Stirnseite einen Vorsprung 154 aufweisen, der eine umlaufende Seitenfläche 155 hat. Auch diese umlaufende Seitenfläche 155 des Spindeltellers 153 kann an einem entsprechenden zweiten Abschnitt 117 des Ventilsitzes 115 anliegen und eine zusätzliche Dichtwirkung bedingen. Der zweite Abschnitt 117 des Ventilsitzes 153 kann einen Teil des ersten Abschnitts 201 der Fluidleitung 200 bilden, sodass der innere Abschnitt 154 der Stirnseite des Spindeltellers 153 in den ersten Abschnitt 201 der Fluidleitung 200 ragt, wenn sich der Spindelteller 153 in seiner Schliessstellung befindet. Dadurch kann bei geringer Bauhöhe des Ventils 100 eine sehr gute Dichtwirkung erzielt werden.

Neben dem Ventilsitz 115 bildet der erste Gehäuseabschnitt 110 eine Ventilkammer 105. In dieser Ventilkammer 105 kann sich der Spindelteller 153 bewegen. Beispielsweise kann der Spindelteller 153 Ausmaße (beispielsweise einen Durchmesser DS) aufweisen, die kleiner dimensioniert sind als die Innenmaße der Ventilkammer 105.

Ferner weist die Ventilkammer 105 eine Auslassöffnung 106 auf, an der der zweite Abschnitt 202 der Fluidleitung 200 beginnt. Dabei ist die Auslassöffnung 106 zumindest abschnittsweise in einem Bereich der Ventilkammer 105 angeordnet, der auf einer dem Ventilsitz 115 abgewandten Seite des Spindeltellers 153 liegt. Mit anderen Worten kann in der Offenstellung des Spindelteller 153 das Fluid zwischen Ventilsitz 115 und Spindelteller 153 vorbeiströmen, bevor es (in Bewegungsrichtung des Spindeltellers 153 betrachtet) die Auslassöffnung 106 erreicht. Dies ermöglicht einen nahezu symmetrischen Strömungsverlauf des Fluids um den Spindelteller 153, ein Durchströmen der Ventilkammer 105 und anschließendes Verlassen des Fluids durch die Auslassöffnung 106. Durch diesen Strömungsverlauf können Schwingungen am Spindelteller 153 und in dem Fluid vermieden oder zumindest verringert werden.

Wie insbesondere aus den Figuren 2 und 3 hervorgeht, weist das Ventil 100 eine sehr geringe Bauhöhe auf. Dies wird insbesondere dadurch erzielt, dass eine Achse A2 des zweiten Abschnitts 202 der Fluidleitung 200 schräg zu einer Achse A1 des ersten Abschnitts 201 der Fluidleitung 200 verläuft. Insbesondere bilden die beiden Achsen A1 und A2 einen spitzen Winkel, sodass ein (in Strömungsrichtung des Fluids betrachtet) stromabwärts gelegener Auslass 222 des zweiten Abschnitts 202 der Fluidleitung 200 näher an einem Einlass 220 in den ersten Abschnitt 201 der Fluidleitung 200 liegt als die Auslassöffnung 106 in der Ventilkammer 105.

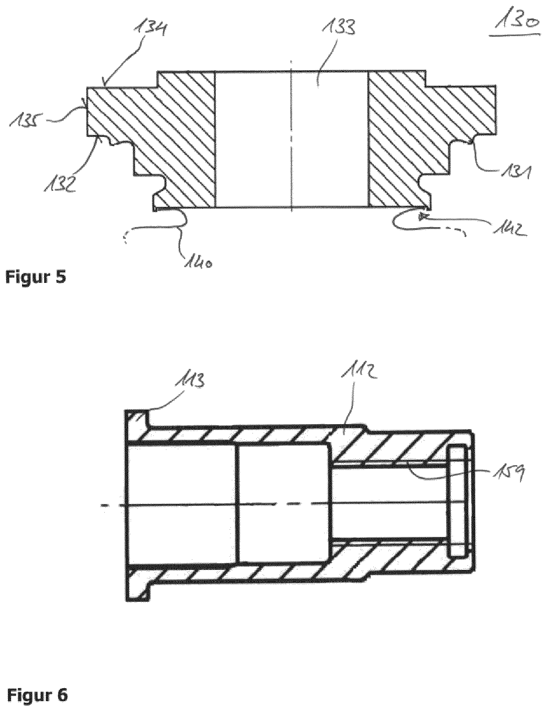

Wie insbesondere in den Figuren 2, 5 und 6 gezeigt ist, kann das Ventil 100 einen zweiten Gehäuseabschnitt 112 aufweisen. An einem dem Ventilsitz 115 des ersten Gehäuseabschnitts 110 zugewandten Ende des zweiten Gehäuseabschnitts 112 kann dieser einen Flansch 113 aufweisen. Der Flansch 113 dient einer sicheren und dichten Befestigung des zweiten Gehäuseabschnitts 112 an dem ersten Gehäuseabschnitt 110.

Zum Beispiel kann das Ventil 100 einen Dichtkranz 130 aufweisen. Der Dichtkranz 130 hat eine Dichtfläche 132, die ein dem Ventilsitz 115 gegenüberliegendes Ende 111 des ersten Gehäuseabschnitts 110 fluiddicht verschließt. Neben einer Ringform kann die Dichtfläche 132 einen umlaufenden Vorsprung 131 aufweisen. Dadurch kann durch Aufpressen des Dichtkranzes 130 auf den ersten Gehäuseabschnitt 110 der umlaufende Vorsprung 131 verformt werden und sich besser an das Ende 111 des ersten Gehäuseabschnitts 110 anpassen und dieses fluiddicht verschließen.

Auf einer gegenüberliegenden Seite des Dichtkranzes 130 kann eine entsprechende Dichtfläche 134 vorgesehen sein, sodass daran der Flansch 113 des zweiten Gehäuseabschnitts 112 anliegen und fluiddicht verschlossen werden kann. Somit kann der Dichtkranz 130 eine fluiddichte Verbindung zwischen erstem Gehäuseabschnitt 110 und zweitem Gehäuseabschnitt 112 bewirken.

Die Befestigung des ersten Gehäuseabschnitts 110 an dem zweiten Gehäuseabschnitts 112 kann beispielsweise durch einen Druckring 120 erfolgen. Der Druckring 120 ist dazu eingerichtet, an dem ersten Gehäuseabschnitts 110 befestigt zu werden und den zweiten Gehäuseabschnitts 112 zumindest abschnittsweise zu umgeben. Die Befestigung an dem ersten Gehäuseabschnitt 110 kann zum Beispiel mittels einer oder mehrerer Schrauben 121 erfolgen, die in den ersten Gehäuseabschnitt 110 geschraubt werden und dabei den Druckring 120 sowohl auf den ersten Gehäuseabschnitt 110 als auch den Flansch 113 des zweiten Gehäuseabschnitts 112 drücken. Alternativ kann der Druckring 120 auch haubenförmig ausgestaltet sein (nicht dargestellt) und auf den ersten Gehäuseabschnitt 110 aufgeschraubt werden.

Durch den Dichtkranz 130 wird ferner die Ventilkammer 105 auf einer dem Spindelteller 153 abgewandten Seite verschlossen. Optional kann der Dichtkranz 130 so dimensioniert sein, dass eine umlaufende Außenfläche 135 des Dichtkranzes 130 eine Fuge zwischen erstem Gehäuseabschnitt 110 und Druckring 120 bedeckt. Dadurch wird eine Dichtwirkung an diesem Ende des ersten Gehäuseabschnitts 110 verbessert.

Der Spindelteller 153 sollte zum Bewegen zwischen seiner Schliessstellung und Offenstellung an eine Spindel 150 gekoppelt sein. Hierfür weist der Dichtkranz 130 eine Öffnung 133 auf, durch die die Spindel 150 geführt werden kann. Durch die vorhandene Dicke des Dichtkranzes 130 kann hier eine entsprechende Dichtwirkung gegenüber dem Fluid geschaffen werden.

Zusätzlich kann eine Dichtwirkung gegenüber dem Fluid auch mittels eines Faltenbalgs 140 erzielt werden. Hierfür wird der Faltenbalg 140, der die Spindel 150 umgibt, an einem ersten Ende 141 fluiddicht an dem Spindelteller 153 befestigt. An einem zweiten Ende 142, das dem ersten Ende 141 gegenüberliegt, wird der Faltenbalg 140 fluiddicht an dem Dichtkranz 130 befestigt. Dadurch wird die Spindel 150 hermetisch abgedichtet. Dies hat neben der Abdichtung gegenüber dem Fluid auch den Vorteil, dass Schmierstoffe oder Abrieb oder Ähnliches von der Spindel nicht in die Ventilkammer 105 gelangen, insbesondere nicht in den medienseitigen, von Fluid durchströmten, Bereich der Ventilkammer 105.

Die Bewegung des Spindeltellers 153 zwischen seiner Schliessstellung und seiner Offenstellung kann dadurch erzielt werden, dass die Spindel 150 in einem Gewinde 159, zum Beispiel in dem zweiten Gehäuseabschnitts 112, geführt wird. Durch Drehen der Spindel 150, beispielsweise durch den Aktuator 190 (hier beispielhaft als Handgriff dargestellt) kann die Spindel 150 einen Hub H (siehe Figur 2) aufweisen. Dieser Hub H, also eine lineare Bewegung in Längsrichtung der Spindel 150, wird auf den Spindelteller 153 übertragen, sodass dieser zwischen Offenstellung und Schliessstellung bewegt wird.

Optional kann die Spindel 150 aus einem ersten Spindelteil 151 und einem zweiten Spindelteil 152 bestehen. Durch ein zwischen dem ersten Spindelteil 151 und dem zweiten Spindelteil 152 angeordnetem Kupplungsglied 180 kann die Drehbewegung des zweiten Spindelteils 152 in dem Gewinde 159 von dem ersten Spindelteil 151 entkoppelt werden. Dadurch wird der Spindelteller 153 nur linear in Längsrichtung der Spindel 150 bewegt, wodurch die Dichtelemente am Spindelteller 153, insbesondere das ringförmige Dichtelement 160, geschont werden.

Lediglich beispielhaft kann der Spindelteller sowie der zu diesem Bauteil gehörende Spindelteil 151 aus einem austenitischen Chrom-Nickel-Stahl der V2A und V4A Reihe hergestellt sein. Gleiches gilt für den ersten Gehäuseabschnitt 110, der den Ventilsitz 115 bildet. der zweite Spindelteil 152 kann zum Beispiel aus einem martensitischem Chrom-Nickel-Stahl gefertigt sein, wie zum Beispiel Chrom-Nickel-Stahl 1.4057. Dadurch wird ein Festfressen oder Kaltverschweissen, insbesondere an dem Gewinde 159, vermieden.

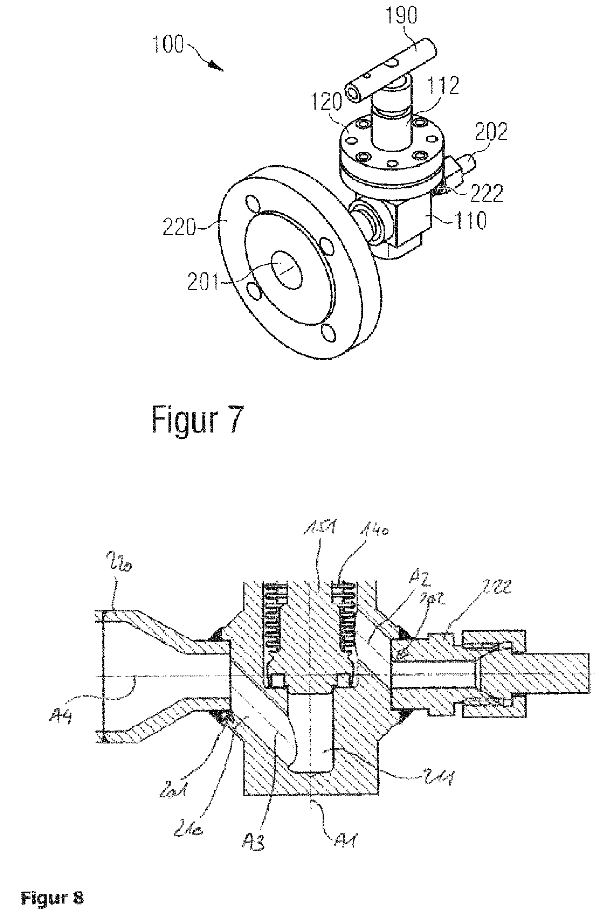

In Figur 7 ist schematisch eine perspektivische Ansicht eines weiteren beispielhaften Ventils 100 gezeigt. Auch dieses Ventil 100 weist einen ersten Abschnitt 201 einer Fluidleitung 200 und einen zweiten Abschnitt 202 einer Fluidleitung 200 auf. Ferner mit Bezug auf Figur 8, die eine schematische Schnittansicht eines ersten Gehäuseabschnitts 110 des Ventils 100 zeigt, ist zu erkennen, dass auch der erste Abschnitt 201 der Fluidleitung 200 eine Biegung oder einen Knick aufweist. Mit anderen Worten weist der erste Abschnitt 201 der Fluidleitung 200 einen Teil 210 auf, dessen Achse A3 schräg zu der Achse A1 eines in Strömungsrichtung anschließenden Teils 211 des ersten Abschnitts 201 der Fluidleitung 200 angeordnet ist.

Die übrigen Elemente des Ventils 100 entsprechen denen aus dem beispielhaften Ventil 100 gemäß der Figuren 1 bis 6. Daher wird die Beschreibung dieser Elemente hier nicht wiederholt.

Lediglich beispielhaft können die Achsen A3 und A2 parallel zueinander verlaufen, sodass ein Einlass 220 und ein Auslass 222 der Fluidleitung 200 eine gemeinsame Achse A4 aufweisen. Somit kann das hier beschriebene Ventil 100 sowohl als Eckventil (Figuren 1 und 2) als auch als Durchgangsventil (Figuren 7 und 8) eingesetzt werden. Lediglich der erste Gehäuseabschnitts 110 des Ventils 100 bedarf einer anderen Bauform bezüglich des ersten Abschnitts 201 der Fluidleitung 200. Zum Beispiel kann der erste Gehäuseabschnitt 110 einen Standardanschluss 25E nach DIN EN 629-1 aufweisen (siehe Figur 2), sodass sich das Ventil 100 in Standarddruckbehälter einschrauben lässt.

Die oben beschriebenen Ausführungsbeispiele und Varianten dienen nur der Veranschaulichung der Erfindung. Alle Beispiele, Varianten und einzelne Details können beliebig miteinander kombiniert werden, um bestimmte Ausführungsformen der Erfindung zu bilden.

## Patentansprüche

1. Ventil (100) für eine Fluidleitung (200), wobei das Ventil (100) umfasst:
einen ersten Gehäuseabschnitt (110), der einen Ventilsitz (115) bildet; und
einen Spindelteller (153), der dazu eingerichtet ist, von einer Schließstellung zu einer Offenstellung bewegt zu werden,
**dadurch gekennzeichnet, dass**
der Spindelteller (153) ferner dazu eingerichtet ist, ein ringförmiges Dichtelement (160) aufzunehmen, das in der Schließstellung des Spindeltellers (153) an einem ersten Abschnitt (116) des Ventilsitzes (115) anliegt, und
der Spindelteller (153) mindestens einen Abschnitt (154, 155, 156, 157) umfasst, der in der Schließstellung des Spindeltellers (153) an einem zweiten Abschnitt (116, 117) des Ventilsitzes (115) anliegt.

2. Ventil (100) gemäß Anspruch 1, wobei ein stirnseitiger Abschnitt (154, 156, 157) des Spindeltellers (153) in der Schließstellung des Spindeltellers (153) an dem zweiten Abschnitt (116, 117) des Ventilsitzes (115) fluiddicht anliegt.

3. Ventil (100) gemäß Anspruch 1 oder 2, wobei der Ventilsitz (115) zumindest einen ersten Abschnitt (201) der Fluidleitung (200) bildet,
der Spindelteller (153) stirnseitig stufenförmig ausgebildet ist und ein innerer Abschnitt (154) der Stirnseite des Spindeltellers (153) weiter zu dem Ventilsitz (115) ragt, und
wobei in der Schließstellung des Spindeltellers (153) der innere Abschnitt (154) des Spindeltellers (153) in den ersten Abschnitt (201) der Fluidleitung (200) ragt.

4. Ventil (100) gemäß Anspruch 3, wobei der innere Abschnitt (154) des Spindeltellers (153) eine umlaufende Seitenfläche (155) aufweist, die mit einer Innenseite (117) des ersten Abschnitts (201) der Fluidleitung (200) korrespondiert und in der Schließstellung des Spindeltellers (153) an der Innenseite (117) des ersten Abschnitts (201) der Fluidleitung (200) fluiddicht anliegt.

5. Ventil (100) gemäß einem der Ansprüche 1 bis 4, wobei der Spindelteller (153) einen stirnseitig angeordneten, äußeren umlaufenden Abschnitt (156) aufweist, der das ringförmige Dichtelement (160) außenseitig umgibt und dazu eingerichtet ist, das ringförmige Dichtelement (160) kraftschlüssig festzuhalten.

6. Ventil (100) gemäß einem der Ansprüche 1 bis 5, ferner umfassend:
einen ersten Spindelteil (151), an dem der Spindelteller (153) ausgebildet ist; und
einen Dichtkranz (130), der eine Öffnung (133), durch die der erste Spindelteil (151) ragt, und eine Dichtfläche (132), die ein dem Ventilsitz (115) gegenüberliegendes Ende (111) des ersten Gehäuseabschnitts (110) fluiddicht verschließt, aufweist.

7. Ventil (100) gemäß Anspruch 6, ferner umfassend:
einen Faltenbalg (140), der den ersten Spindelteil (151) umgibt und der an einem ersten Ende (141) fluiddicht an dem Spindelteller (153) befestigt ist und an einem zweiten Ende (142), das dem ersten Ende (141) gegenüberliegt, fluiddicht an dem Dichtkranz (130) befestigt ist.

8. Ventil (100) gemäß Anspruch 6 oder 7, ferner umfassend:
einen zweiten Gehäuseabschnitt (112), der an einem dem Ventilsitz (115) zugewandten Ende einen Flansch (113) aufweist; und
einen Druckring (120), der dazu eingerichtet ist, an dem ersten Gehäuseabschnitt (110) befestigt zu werden und den zweiten Gehäuseabschnitt (112) zumindest abschnittsweise zu umgeben,
wobei der Druckring (120) so geformt ist, dass der Flansch (113) des zweiten Gehäuseabschnitts (112), wenn der Druckring (120) an dem ersten Gehäuseabschnitt (110) befestigt ist, auf einer der Dichtfläche (132) des Dichtkranzes (130) gegenüberliegenden Seite (134) des Dichtkranzes (130) anliegt und den Dichtkranz (130) zwischen dem Flansch (113) und dem dem Ventilsitz (115) gegenüberliegenden Ende (111) des ersten Gehäuseabschnitts (110) einklemmt.

9. Ventil (100) gemäß Anspruch 8, wobei der Dichtkranz (130) so geformt ist, dass eine umlaufende Außenseite (135) des Dichtkranzes (130) an einem Teil des ersten Gehäuseabschnitts (110) und an einem Teil des Druckrings (120) in einem Bereich anliegt, an dem der Druckring (120) den ersten Gehäuseabschnitt (110) berührt.

10. Ventil (100) gemäß einem der Ansprüche 1 bis 9, wobei der erste Gehäuseabschnitt (110) eine Ventilkammer (105) mit einer Auslassöffnung (106), an der ein zweiter Abschnitt (202) der Fluidleitung (200) beginnt, bildet, und
wobei die Auslassöffnung (106) zumindest abschnittsweise in einem Bereich der Ventilkammer (105), der auf einer dem Ventilsitz (115) abgewandten Seite des Spindeltellers (153) liegt, angeordnet ist.

11. Ventil (100) gemäß Anspruch 10, wobei der zweite Abschnitt (202) der Fluidleitung (200) eine Achse (A2) aufweist, die schräg zu einer Achse (A1) des ersten Abschnitts (201) der Fluidleitung (200) liegt, und
wobei vorzugsweise die Achse (A2) des zweiten Abschnitts (202) der Fluidleitung (200) in Ausströmrichtung des Fluids einen spitzen Winkel zur Achse (A1) des ersten Abschnitts (201) der Fluidleitung (200) bildet.

12. Druckbehälter (10) für ein Fluid, wobei der Druckbehälter (10) mindestens ein Ventil (100) gemäß einem der Ansprüche 1 bis 11 umfasst.
